# EUROPEAN PATENT SPECIFICATION

(11) **EP 2 827 038 B1**
(45) Date of publication and mention of the grant of the patent: **28.06.2017**
(21) Application number: 13743373.6
(22) Date of filing: 24.01.2013
(51) Int. Cl.: F16L 37/092, F16L 33/22

(54) **TUBE JOINT**
ROHRVERBINDUNG
RACCORD DE TUYAU

(30) Priority: 31.01.2012 JP 2012019252; 31.01.2012 JP 2012019253
(43) Date of publication of application: 21.01.2015
(73) Proprietor: Toyox Co., Ltd., Kurobe-shi Toyama 938-8585 (JP)
(72) Inventor: SHIMAZAKI Tsutomu, Kurobe-shi Toyama 938-8585 (JP)
(74) Representative: Rentsch Partner AG
(86) International application number: PCT/JP2013/051386
(87) International publication number: WO 2013/115044

(56) References cited:
- EP-A2- 2 228 581
- GB-A- 1 603 670
- JP-A- H 116 594
- JP-A- H1 113 973
- JP-A- H11 351 480
- JP-A- 2000 257 778
- JP-A- 2001 056 080
- JP-A- 2001 074 013
- JP-A- 2003 083 492
- JP-A- 2003 329 181
- JP-A- 2003 343 783
- JP-A- 2004 308 794
- JP-A- 2008 240 881
- JP-A- 2010 043 729
- JP-A- 2011 089 564
- JP-B2- 2 775 079
- JP-B2- 2 968 775

## Description

### TECHNICAL FIELD

The present invention relates to a one-push type tube joint capable of connecting without a tool only by inserting a tube body. Examples of the tube body herein include a hose or a tube which is flexible as well as deformable and is formed from a soft material such as a synthetic resin or rubber.

### BACKGROUND OF THE INVENTION

In the prior art, such a type of a tube joint may include a tubular body, a nut-like member, a stopper and a spring. Here, a ring-shaped hole into which a pipe is inserted is formed inside the tubular body. A seal member is fixed to an inner periphery of the ring-shaped hole. By inserting the pipe, the inner periphery comes into contact with the seal member and moves with a little resistance. At the same time, an outer periphery of the pipe butts against protruded and recessed parts of a metallic fragment of the stopper, which leads the stopper to move inward. Even though a tapered surface of the stopper intends to move in a direction separating from a tapered surface of the nut-like member, the stopper is pushed in an opposite direction by the spring, so that the stopper does not move. As a result, a state where the tapered surface of the nut-like member and the tapered surface of the stopper come into contact with each other with constant pushing force can be maintained (see, for example, Patent Literature 1). A tube joint according to the preamble of claim 1 is known from Patent Literature 2. A similar tube joint is known from Patent Literature 3.

### CITATION LIST

### PATENT LITERATURE

Patent Literature 1: Japanese Patent Publication Number 2003-227592
Patent Literature 2: EP 2 228 581 A2
Patent Literature 3: JP 2010 043729 A

### SUMMARY OF INVENTION

### TECHNICAL PROBLEM TO BE SOLVED BY THE INVENTION

However, in such a tube joint in the prior art, the pipe is inserted while the inner periphery thereof is pressed on the seal member. Therefore, there is a problem that the seal member may be turned up, deformed and dislocated in inserting the pipe, which results in leakage of the fluid.

Specifically, in cases where even subtle dimensional errors appear on an internal diameter of the pipe or an attachment external diameter of the seal member, the seal member may be easily turned up, deformed and dislocated, which leads to an accident that the fluid leaks from the pipe.

A problem of the present invention is to deal with such problems. An object of the present invention is to smooth insertion of a tube body and to maintain the tube body not to slip out for sure only by inserting the tube body.

### SOLUTION TO PROBLEM

In order to achieve such an object, the tube joint of the present invention includes, a nipple provided to be opposed to an inner surface of a tube body having flexibility, a clamping member having a tapered surface provided to be opposed to an outer periphery of the nipple and provided so that a diameter thereof gradually becomes larger in an inserting direction of the tube body, a sleeve provided to be movable to and fro along the tapered surface in an inclined direction of the tapered surface and which elastically and radially expands or contracts in a radial direction, and an elastic member provided so as to push the sleeve along the tapered surface in a direction opposite to the inserting direction of the tube body, wherein the sleeve includes, a projection part configured to be formed in an inner periphery of the sleeve so as to protrude with respect to the outer periphery of the nipple, and to be disposed to butt against a tip surface of the tube body opposed to the inserting direction of the tube body when inserting the tube body, and to be disposed so as to radially contract with respect to an outer surface of the tube body when moving in the direction opposite to the inserting direction of the tube body, and a sliding surface configured to be formed on an outer periphery of the sleeve to be opposed to the tapered surface, and to move along the tapered surface in the inserting direction of the tube body when the projection part butts against the tip surface of the tube body, and to be disposed so as to move in the direction opposite to the inserting direction of the tube body due to the elastic member, wherein the projection part radially expands so that the tip surface of the tube body comes off the projection part by being moved in the inserting direction of the tube body when butting against the tip surface of the tube body, and the projection part radially contracts so as to be smaller than an external diameter of the tube body when moving in the direction opposite to the inserting direction of the tube body due to the elastic member, wherein the nipple includes the annular seal member configured to be fixed to the annular recessed part formed in the outer periphery of the nipple, and to protrude in the radial direction, wherein a rib part provided to the outer periphery of the nipple so as to protrude gradually with respect to the outer peripheral edge of the annular seal member, characterized in that a plurality of the rib parts is dispersedly disposed along the outer periphery in the circumferential direction closer to the tip end of the nipple than at least the annular seal member.

### ADVANTAGEOUS EFFECT OF INVENTION

In an embodiment of the present invention having the above-mentioned characteristics, the tube body can be inserted smoothly without butting against the annular seal member 1c, and the tube body can be connected unrotatably with respect to the nipple. As a result, compared to one in the prior art in which the tube body overcomes protuberant parts (buildup parts) provided to both the front and the rear thereof, and a seal ring provided between the protuberant parts, it is possible to effectively prevent the annular seal member from sticking out the annular recessed part and from turning up. Further, it is possible to remove any cause that leads damages and malfunction of sealability in the annular seal member. At the same time, even when the tube body contorts with respect to the nipple, the tube body does not slip out. Therefore, it is possible to surely prevent leakage of fluid passing through the tube body and to improve intensity of the tube body against slip-out.

### BRIEF DESCRIPTION OF DRAWINGS

Figs. 1(a) and 1(b) are longitudinal front views illustrating an overall structure of a tube joint not comprised by the present invention. While Fig. 1(a) illustrates the tube joint at the time when a tube body starts connecting to the tube joint, Fig. 1(b) illustrates the tube joint at the time when the tube body completes connecting to the tube joint.
Fig. 2 is an enlarged longitudinal side view taken along line (2)-(2) in Fig. 1(b).
Fig. 3 is an enlarged front view partially illustrating the view of Fig. 1(b) except that the tube body and a clamping member are omitted.
Figs. 4(a) to (c) are contracted longitudinal front view illustrating a process of connecting the tube joint to the tube body. The process is described sequentially in Figs. 4(a) to 4(c).
Figs. 5(a) and 5(b) are longitudinal front views illustrating an overall structure of another tube joint not comprised by the present invention. While Fig. 5(a) illustrates the tube joint at the time when a tube body starts connecting to the tube joint, Fig. 5(b) illustrates the tube joint at the time when the tube body completes connecting to the tube joint.
Fig. 6 is an enlarged front view partially illustrating the view of Fig. 5(b) except that the tube body and a clamping member are omitted.
Figs. 7(a) and 7(b) are longitudinal front views illustrating an overall structure of a tube joint according to an embodiment of the present invention. While Fig. 7(a) illustrates the tube joint at the time when a tube body starts connecting to the tube joint, Fig. 7(b) illustrates the tube joint at the time when the tube body completes connecting to the tube joint.
Fig. 8(a) is an enlarged longitudinal side view taken along line (8A)-(8A) of Fig. 7(b), while Fig. 8(b) is a side view for explaining how to form a nipple.
Fig. 9 is an exploded perspective view of Figs. 7(a) and 7(b).
Fig. 10 is an exploded perspective view illustrating a modification of a rib part.
Fig. 11 is an exploded perspective view illustrating another modification of the rib part.
Figs. 12(a) and 12(b) are longitudinal front views illustrating an overall structure of a tube joint not comprised by the present invention. While Fig. 12(a) illustrates the tube joint at the time when a tube body starts connecting with the tube joint, Fig. 12(b) illustrates the tube joint at the time when the tube body completes connecting to the tube joint.

### DESCRIPTION OF EMBODIMENTS

Hereinafter, embodiments of tube joints will be described with reference to the accompanying drawings.

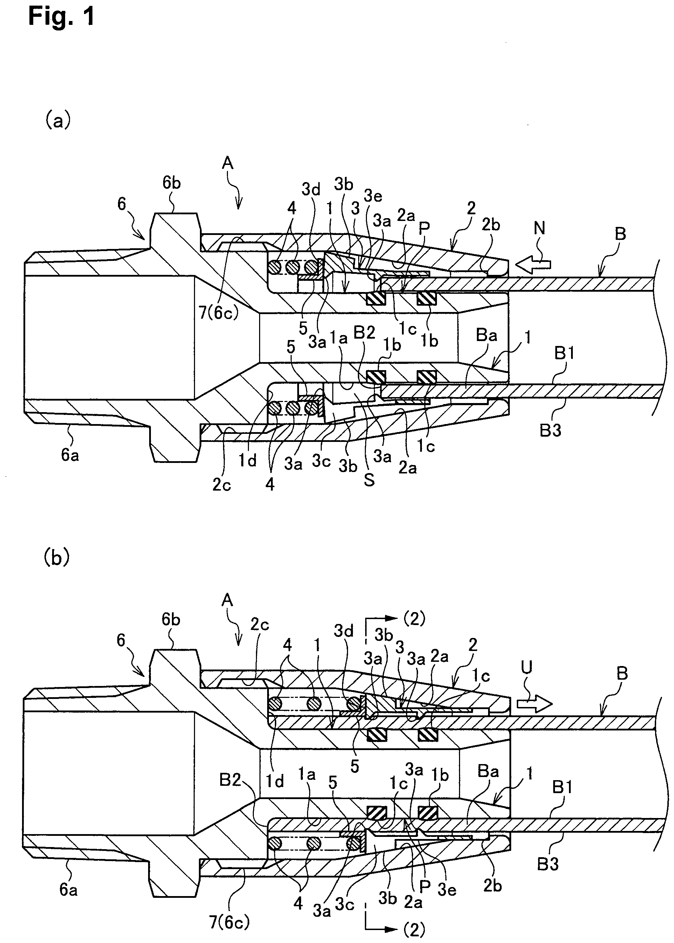

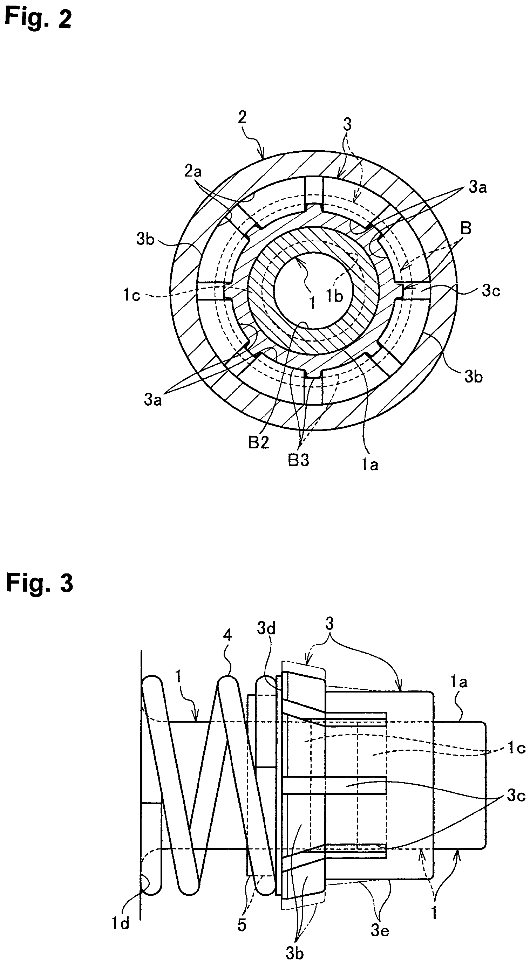

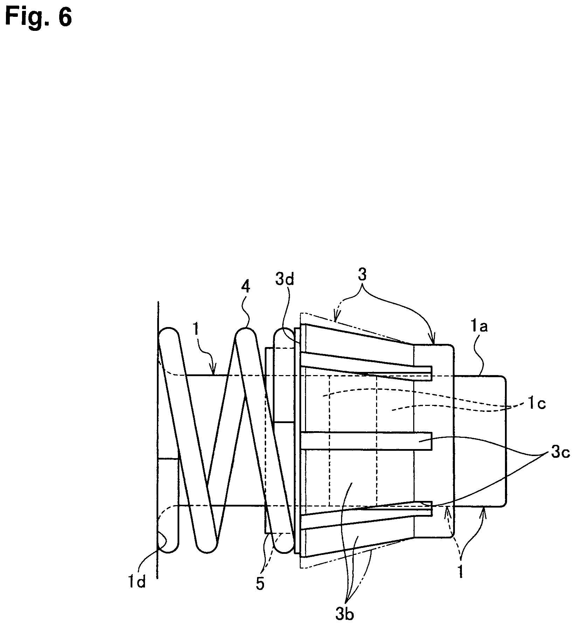

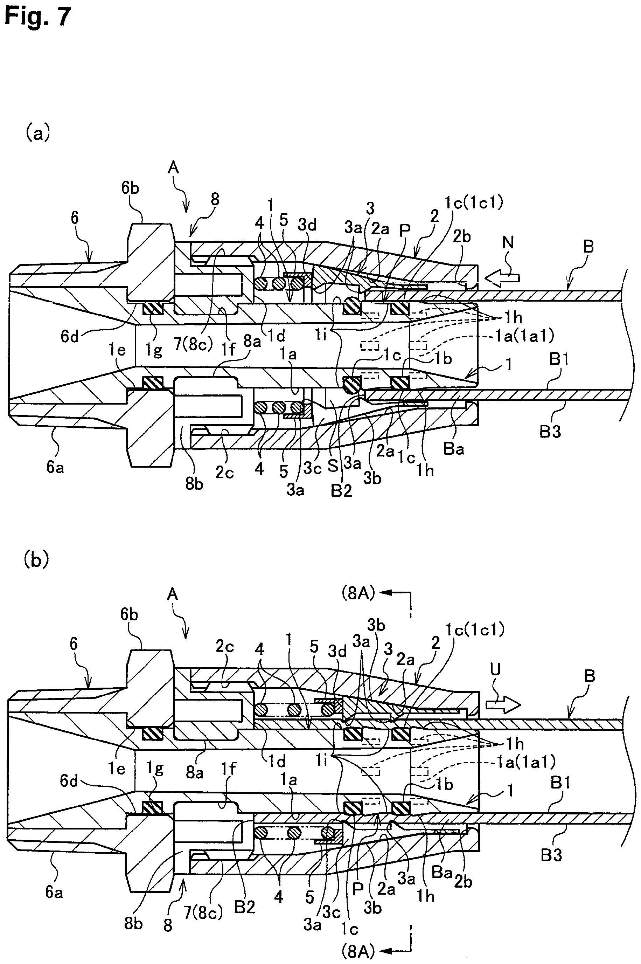

A tube joint A comprises a nipple 1, a clamping member 2, a sleeve 3 and an elastic member 4 as primary components, as shown in Figs. 1(a) to 12(b), wherein Fig. 7(a) to 11 represent embodiments of the present invention. The nipple 1 is provided to be opposed to an inner surface B1 of a tube body B. The clamping member 2 is provided to include a tapered surface 2a opposed to an outer periphery 1a of the nipple 1, and inclined in an axial direction of the nipple 1. The sleeve 3 is provided to be movable to and fro along the tapered surface 2a of the clamping member 2 in an inclined direction of the tapered surface 2a. Further, the sleeve 3 is capable of expanding or contracting elastically and radially in a radial direction. The elastic member 4 is provided so as to push the sleeve 3 along the tapered surface 2a in the inclined direction thereof.

As shown in Fig. 1(a), by inserting a connection end Ba disposed in one end of the tube body B into an insertion space S formed between the nipple 1 and the sleeve 3, the sleeve 3 moves in an inserting direction of the tube body B while resisting the elastic member 4. Then, as shown in Fig. 1(b), the sleeve 3 moves in an opposite direction to a tube inserting direction N, and the connection end Ba of the tube body B is sandwiched between the nipple 1 and the sleeve 3. By holding this state, the tube body B is maintained to be connected to the tube joint A, and cannot be withdrawn. Hereinafter, the inserting direction of the tube body B with respect to the nipple 1 will be referred to as the "tube inserting direction N" (see an arrow in Fig. 1(a)). Hereinafter, the opposite direction to the tube inserting direction N will be referred to as a "slip-out direction U" (see an arrow in Fig. 1(b)).

The nipple 1 is formed from a rigid material such as metals (e.g., brass), polyacetal and other hard synthetic resins. Further, the nipple 1 is formed in a cylindrical shape having an external diameter substantially similar to an internal diameter of the tube body B (hereinafter described), or slightly smaller than the same. Moreover, the nipple 1 is formed in a cylindrical shape having a thin wall thickness as well as the external diameter substantially similar to the internal diameter of the tube body B or slightly smaller than the same by carrying out a press process or other forming process on a plate, for example, a stainless plate, including a deformable rigid material.

In the outer periphery 1a of the nipple 1, an annular recessed part 1b is formed. The annular recessed part 1b herein is formed to be opposed to the inner surface B1 of the connection end Ba of the tube body B (hereinafter described) and to extend in a circumferential direction. An annular seal member 1c is fixed inside the annular recessed part 1b.

It is preferable that the annular seal member 1c is formed from an elastically deformable material such as an O-ring. While being fitted into the annular recessed part 1b of the nipple 1, it is preferable to dispose the whole outer peripheral edge 1c1 of the annular seal member 1c so as to protrude slightly farther than the outer periphery 1a of the nipple 1 in the radial direction and to press the inner surface B1 of the tube body B (hereinafter described).

In the embodiment shown, a plurality of (two) annular recessed parts 1b are formed in the axial direction of the nipple 1 at an appropriate interval. In other words, in the outer periphery 1a of the nipple 1, a first annular recessed part 1b and a first annular seal member 1c, and a second annular recessed part 1b and a second annular seal member 1c, these two pairs are disposed at a predetermined interval in the tube inserting direction N.

Specifically, in the embodiment shown in Figs. 1(a) to 6, the whole outer periphery 1a except for the annular recessed parts 1b is formed on a flat surface in the tube inserting direction N.

Further, as another embodiment, though it is not shown in the drawings, only one pair of the annular recessed part 1b and the annular seal member 1c can be disposed, or three or more pairs of the annular recessed parts 1b and the annular seal members 1c can be disposed in the axial direction of the nipple 1 at a predetermined interval. Alternatively, regardless of a position where the annular recessed part 1b is disposed, the outer periphery 1a can be formed like a bamboo sprout in which a plurality of annular projections and annular ditches are formed in turn in the tube inserting direction N.

The clamping member 2 is formed from an anti-corrosive metallic material such as stainless materials, or from other rigid materials. Further, the clamping member 2 is formed in a substantially cylindrical shape, a part of which in its axial direction has an internal diameter larger than an external diameter of the sleeve 3 (hereinafter described). Moreover, the clamping member 2 is immovably mounted on or is coupled to the nipple 1 side in the axial direction.

In an inner periphery of the clamping member 2, the tapered surface 2a is formed as a means of clamping the sleeve 3 (hereinafter described). The tapered surface 2a is provided in an inclined manner so that its diameter gradually becomes larger in the tube inserting direction N and gradually becomes smaller in the slip-out direction U.

In the inner periphery of the clamping member 2, a latching part 2b (hereinafter described) opposed to the sleeve 3 is formed at a tip end side of the slip-out direction U. When the sleeve 3 moves in the slip-out direction U and butts against the latching part 2b, the latching part 2b prevents the sleeve 3 from moving farther in the slip-out direction U.

The sleeve 3 is formed from an elastically deformable material such as a polyacetal resin or other synthetic resins having excellent surface slippage and heat resistance. Further, the sleeve 3 is formed in a substantially cylindrical shape that is capable of expanding or contracting radially in the radial direction. In cases where an internal diameter of the sleeve 3 expands, it is set to be as substantially large as an external diameter of the tube body B (hereinafter described). On the other hand, in cases where the internal diameter of the sleeve 3 contracts, it is set to be smaller than the external diameter of the tube body B.

Further, the sleeve 3 is supported so as be movable to and fro along the outer periphery 1a of the nipple 1 and the tapered surface 2a of the clamping member 2, in the tube inserting direction N and the slip-out direction U.

The sleeve 3 includes a projection part 3a in an inner periphery thereof. The projection part 3a is formed so as to protrude with respect to the outer periphery 1a of the nipple 1 and is shaped in an annular shape or in an almost annular shape in the circumferential direction.

In a case of inserting the tube body B, the projection part 3a is disposed to be opposed to and butt against the tip surface B2 of the connection end Ba of the tube body B (hereinafter described) in the tube inserting direction N. At the same time, in a case of moving in the slip-out direction U, the projection part 3a is formed so that an internal edge thereof contracts smaller than the external diameter of the tube body B with respect to the outer surface B3 of the connection end Ba.

Regarding the number of the projection part 3a, it is preferable to dispose a plurality of the projection parts 3a in the tube inserting direction N.

In the embodiment shown, in the inner periphery of the sleeve 3, two projection parts 3a are integrally formed at a predetermined interval. That is, a first projection parts 3a is formed at the center position of the axial direction, and a second projection parts 3a is formed at the back end of the tube inserting direction N. Specifically, in completing connection of the tube body B as shown in Fig. 1(b), it is preferable that the first projection part 3a and the second projection part 3a are respectively disposed closer to the back side of the tube inserting direction N than the first annular seal member 1c and the second annular seal member 1c.

Further, as another embodiment, though it is not shown in the drawings, only one projection part 3a can be formed, or three or more projection parts 3a can be formed in the axial direction of the sleeve 3 at a predetermined interval.

Further, the sleeve 3 includes a sliding surface 3b and an elastically deformable part 3c. The sliding surface 3b is formed in an outer periphery of the sleeve 3 and is opposed to the tapered surface 2a of the clamping member 2. The elastically deformable part 3c makes the projection part 3a and the sliding surface 3b elastically expand or contract in the radial direction of the sleeve 3.

The sliding surface 3b is formed along the outer periphery of the sleeve 3 so as to be substantially parallel to the tapered surface 2a of the clamping member 2. Further, the sliding surface 3b is shaped in an annular shape or in an almost annular shape in the circumferential direction. In a state that the sliding surface 3b is not in contact with the tapered surface 2a which is not set inside the clamping member 2, the sliding surface 3b is configured to press the tapered surface 2a continuously and elastically by setting the largest diameter of the sliding surface 3b larger than the largest diameter of the tapered surface 2a.

To explain in detail, the sliding surface 3b is disposed so as to move along the tapered surface 2a in the tube inserting direction N when the projection part 3a butts against the tip surface B2 of the tube body B. Further, the sliding surface 3b is disposed so as to move in the slip-out direction U due to the elastic member 4 (hereinafter described).

Regarding the elastically deformable part 3c, slots, recesses and the like are notchedly formed in a part of the axial direction of the sleeve 3. The elastically deformable part 3c is configured to be elastically deformable in the radial direction. When the sliding surface 3b moves backward in the tube inserting direction N while being in contact with the tapered surface 2a, the sliding surface 3b smoothly and radially expands. At the same time, when the sliding surface 3b moves forward in the slip-out direction U while being in contact with the tapered surface 2a, the sliding surface 3b smoothly and radially contracts.

In the embodiment shown, the sliding surface 3b is bulgingly formed in a part of the axial direction of the sleeve 3, more specifically, in a part from the center position of the axial direction to the back end of the tube inserting direction N. At the same time, a plurality of slots (slits) which linearly extends in the axial direction longer than the sliding surface 3b is notchedly formed in the circumferential direction.

Further, as another embodiment, though it is not shown in the drawings, the sliding surface 3b can be bulgingly formed only at the center position of the axial direction. Alternatively, a slot which linearly extends in the axial direction with a length almost similar to that of the sliding surface 3b can be notchedly formed. Further, only one slot can be notchedly formed throughout the axial direction of the sleeve 3, or a plurality of slots which extends from both ends of the axial direction of the sleeve 3 to the axial direction can be notchedly formed in the circumferential direction. Still further, a slot which extends non-linearly, for example, in a curved shape, can be formed as well.

Further, in the projection part 3a, it is preferable that a butting surface opposed to the tip surface B2 of the tube body B gradually inclines in the tube inserting direction N with respect to an internal edge of the butting surface. At the same time, it is preferable that the internal edge of the butting surface is sharply acuminated with respect to the outer surface B3 of the tube body B.

Accordingly, when the projection part 3a radially expands, the internal edge of the butting surface is formed so that an outer peripheral edge of the tip surface B2 of the tube body B smoothly comes off and passes the internal edge. On the other hand, when the projection part 3a radially contracts, the internal edge of the butting surface is formed to cut into the outer surface B3 of the tube body B for sure.

Further, in the outer periphery 1a of the nipple 1, it is preferable to dispose the annular recessed part 1b and the annular seal member 1c within a path P in which the sleeve 3 radially expands. The path is the region where the projection part 3a of the sleeve 3 butts against the tip surface B2 of the tube body B.

The path P in which the sleeve 3 radially expands represents a region in the outer periphery 1a of nipple 1. Here, when the tip surface B2 of the tube body B which has been inserted butts against the projection part 3a of the sleeve 3, and is pushed in the tube inserting direction N, the projection part 3a and the sliding surface 3b radially expand due to radial expansion of the elastically deformable part 3c.

The elastic member 4 is an elastic body, such as a coil spring or a spring, which are formed so as to expand or contract elastically at least in one direction. Further, the elastic member 4 is disposed from the side of the nipple 1 or the clamping member 2 to the side of the sleeve 3 so as to extend or contract deformably in the tube inserting direction N and the slip-out direction U. The elastic member 4 herein continuously and elastically pushes the sleeve 3 in the slip-out direction U.

In the embodiment shown, a coil spring is interposed as the elastic member 4 between a step 1d and an annular spring holder 5. The step 1d is protrusively formed in the back side of the tube inserting direction N in the outer periphery 1a of the nipple 1. The annular spring holder 5 is disposed in the back end 3d of the tube inserting direction N in the sleeve 3. Due to this structure, pushing force of the coil springs acts on the sleeve 3 evenly in the circumferential direction.

Further, as another embodiment, though it is not shown in the drawings, an elastic body different from the coil spring can be used as the elastic member 4. Alternatively, the sleeve 3 and the elastic member 4 can be brought into contact without involving the spring holder 5, or the elastic member 4 can be disposed from the clamping member 2 to the sleeve 3.

On the other hand, embodiments of the tube body B includes a hose or a tube formed from a flexible soft material such as a soft synthetic resin (for example, vinyl chloride), silicone rubber and other rubber. Further, it is preferable that the inner surface B1 and the outer surface B3 are made flat.

As a specific embodiment of the tube body B, a single-layer structural hose is used in the embodiment shown.

Further, as another embodiment, though it is not shown in the drawings, following hoses can be used as an interlayer between an external layer and an internal layer which are transparent or opaque, a laminated hose (braid hose) in which a plurality of or a single synthetic resin braid (reinforced thread) is spirally buried, a spiral reinforced hose (VOHRAN HOSE) in which a belt-like reinforced member and a linear reinforced member are spirally wrapped to be integrated as the interlayer. Here, the belt-like reinforced member and the linear reinforced member are made of a synthetic resin or a metal. The former has a rectangular cross sectional shape, while the latter has a circular cross sectional shape, and a spiral reinforced hose in which a wire rod made of a metal or a hard synthetic resin is spirally buried.

Further, a joint main body 6 which other instruments (not shown), other tube bodies (not shown) and the like are connected to is provided to the above-mentioned nipple 1. It is preferable to couple other instruments, other tube bodies and the like connected to the joint main body 6, to the tube body B connected to the outer periphery 1a of the nipple 1 by involving the joint main body 6.

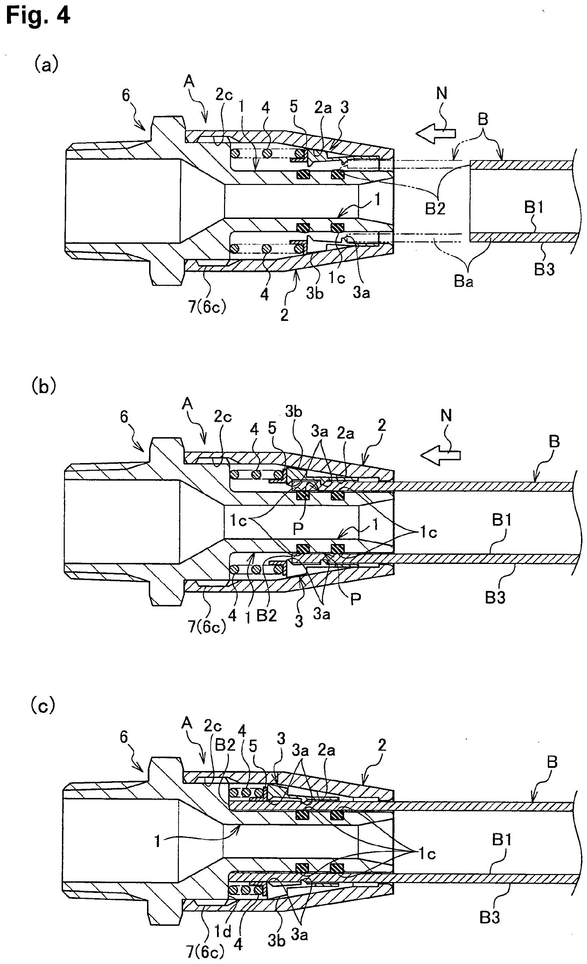

According to the tube joint A, by inserting the connection end Ba of the tube body B with respect to an insertion space S formed between the nipple 1 and the sleeve 3 as shown in Fig. 4(a), first, the tip surface B2 of the tube body B butts against the projection part 3a (first projection part 3a) of the sleeve 3. By pushing the tube body B while maintaining this butting status, the sliding surface 3b of the sleeve 3 slides along the tapered surface 2a of the clamping member 2. Then, the whole sleeve 3 including the projection part 3a moves in the tube inserting direction N while resisting the pushing force of the elastic member 4.

Accordingly, as shown in Fig. 1(a), the sliding surface 3b of the sleeve 3 is pushed along the tapered surface 2a in the tube inserting direction N. Therefore, due to the radial expansion of the elastically deformable part 3c, the sliding surface 3b and the projection part 3a (first projection part 3a and second projection part 3a) gradually and radially expand.

After that, when a tip internal diameter of the projection part 3a becomes larger than a tip external diameter of the tube body B while the projection part 3a (first projection part 3a) radially expands as shown in Fig. 4(b), the tip surface B2 of the tube body B comes off the projection part 3a (first projection part 3a). Eventually, the tip surface B2 of the tube body B comes off the projection part 3a (second projection part 3a), and butts against the step 1d protrusively formed in the back side of the nipple 1 in the tube inserting direction N as shown in Fig. 4(c), thereby completing insertion.

Accordingly, as shown in Fig. 1(b), the sliding surface 3b of the sleeve 3 is forcibly pushed along the tapered surface 2a in the slip-out direction U by the elastic member 4. At the same time, the sleeve 3 radially contracts at once to make the internal edge of the projection part 3a cut into the outer surface B3 of the tube body B. Then, the tube body B is immovably sandwiched with the outer periphery 1a of the nipple 1 with respect to the slip-out direction U.

Accordingly, it is possible to smooth the insertion of the tube body B and to maintain the tube body B not to slip out for sure only by inserting the tube body B.

Specifically, in the outer periphery 1a of the nipple 1, in cases where the annular seal member 1c opposed to the inner surface B1 of the tube body B is protrusively provided within the path P in which the sleeve 3 radially expands where the projection part 3a of the sleeve 3 butts against the tip surface B2 of the tube body B, the tip surface B2 of the tube body B keeps pressing the projection part 3a by pushing the tube body B. In this pressing state, when the projection part 3a of the sleeve 3 radially expands, both the tip surface B2 and the tip edge of the inner surface B1 in the flexible tube body B slightly and radially expand due to friction resistance caused between both the tip surface B2 and the tip edge of the inner surface B1 and the projection part 3a. Therefore, even though an axial line of the nipple 1 and an axial line of the tube body B to be inserted in the nipple 1 decenter to some extent in the radial direction, the tip edge of the inner surface B1 of the tube body B does not strongly butts against the annular seal member 1c protruded from the outer periphery 1a of the nipple 1, but smoothly overcomes and passes the same.

Accordingly, it is possible to prevent the annular seal member 1c from turning up, deforming, and dislocating when inserting of the tube body B.

As a result, even in cases where a few diameter errors appear on the internal diameter of the tube body B or the annular seal member 1c, it is possible to prevent fluid leakage for sure. Further, it is possible to maintain the tube body B to be sealed for a prolonged period to improve safeness.

Further, in completing connection of the tube body B as shown in Fig. 1(b), in cases where the projection parts 3a (first projection part 3a and second projection part 3a) are disposed closer to the back side of the tube inserting direction N than the annular seal members 1c (first annular seal member 1c and second annular seal member 1c), the sleeve 3 radially contracts and moves farther in the slip-out direction U due to the elastic member 4. This can happen even though a creep (permanent distortion) phenomenon appears on the tube body B due to elapse of time, which makes a wall thickness of the tube body B become thin. Then, the tube body B, whose wall thickness has become slightly thin, is sandwiched between the projection parts 3a (first projection part 3a and second projection part 3a) and the annular seal members 1c (first annular seal member 1c and second annular seal member 1c).

Accordingly, even though the creep appears on the tube body B, it is possible to maintain sealability.

As a result, it is possible to maintain the tube body B to be sealed for a prolonged period to improve further safeness.

Further, in cases where a plurality of the projection parts 3a (first projection part 3a and second projection part 3a) is disposed in the inner periphery of the sleeve 3 in the tube inserting direction N, the tip surface B2 of the tube body B to be inserted repeats a process of butting, coming off, and passing with respect to the plurality of projection parts 3a (first projection part 3a and second projection part 3a) for a plurality of times, as shown in Figs. 1(a) and 4(b). Therefore, the sleeve 3 reciprocates for a plurality of times due to the elastic member 4. At the same time, as shown in Fig. 1(b), the plurality of projection parts 3a (first projection part 3a and second projection part 3a) cuts into the outer surface B3 of the tube body B, due to radial contraction of the sleeve 3.

Accordingly, the sleeve 3 can slide smoothly with respect to the tapered surface 2a and can radially contract for sure.

As a result, it is possible to prevent such malfunction that the sleeve 3 gets stuck with or adheres to the tapered surface 2a, and to maintain a plurality of parts in the tube body B.

Next, each Embodiment will be described with reference to the accompanying drawings.

### Embodiment 1

Embodiment 1 shows a case that a sliding surface 3b is integrally formed in only a part of an axial direction of a sleeve 3, as shown in Figs. 1(a) to 4(c), Embodiment 1 being not comprised by the present invention. Here, the sliding surface 3b is formed by bulgingly forming a part, in an inclined manner, which is closer to the back end of a tube inserting direction N in an outer periphery of the sleeve 3, that is, a part close to elastic member 4.

In a part of the outer periphery of the sleeve 3, except for the back end of the tube inserting direction N, an annular recessed ditch 3e is formed. While a wall thickness diameter of most parts in the axial direction except for the sliding surface 3b becomes thin, a projection part 3a and the sliding surface 3b elastically expand in a radial direction due to radial expansion of an elastically deformable part 3c.

In the embodiment shown in Figs. 1(a) to 4(c), a clamping member 2 is a nut that engraves an internal thread 2c in an inner periphery of the base end side thereof. By screwing the internal thread 2c together with an attaching means 7 of the clamping member 2 provided to a nipple 1 or a joint main body 6, the clamping member 2 is immovably mounted on the nipple 1 side in an axial direction thereof.

Further, as another embodiment, though it is not shown in the drawings, the clamping member 2 can be detachably coupled to the nipple 1 side by a method of fixing other than screwing the attaching means 7 of the clamping member 2. Alternatively, the clamping member 2 can be coupled to the nipple 1 side non-detachably.

Further, in embodiments shown in Figs. 1(a) to 4(c), the tubular joint main body 6 is integrally and protrusively formed on the back side of the tube inserting direction N of the nipple 1. In the joint main body 6, a connecting portion 6a, a tool engaging part 6b, and an external thread 6c are integrally formed. The connecting portion 6a connects to a tube connecting port (not shown) of other instruments, other tube bodies and the like. The tool engaging part 6b is engaged with a tool (not shown) such as a spanner or a wrench. The external thread 6c is screwed together with the internal thread 2c as the attaching means 7 of the clamping member 2.

Regarding the connecting portion 6a, in cases where an internal screw is engraved in an inner periphery of the tube connecting port of other instruments, other tube bodies and the like to be connected to such tube joint A, an outside screw corresponding to the same is engraved. Further, in cases where an outside screw is engraved in an outer periphery of the tube connecting port, an internal screw corresponding to the same is engraved. In the embodiment shown, the outside screw is engraved as the connecting portion 6a.

As the tool engaging part 6b, a hexagon nut is formed.

Further, as another embodiment, though it is not shown in the drawings, the nipple 1 and the joint main body 6 can be formed separately, so that the nipple 1 and the joint main body 6 can be detachably mounted.

According to such a tube joint A according to Embodiment 1, the most parts in the axial direction of the sleeve 3, except for the sliding surface 3b, are formed to have a thin wall thickness. Further, the projection part 3a and the sliding surface 3b have easily become elastically deformable in the radial direction due to the radial expansion of the elastically deformable part 3c. Therefore, only when a tip surface B2 of the tube body B which has been inserted butts against the projection part 3a of the sleeve 3 and is pushed in the tube inserting direction N, the projection part 3a and the sliding surface 3b smoothly and radially expand, and the tip surface B2 of the tube body B surely comes off the projection part 3a.

Accordingly, there are advantages that workability improves, and that insertion of the tube body B can be smoothed. Further, the tube body B can be maintained not to slip out for sure only by inserting the tube body B.

### Embodiment 2

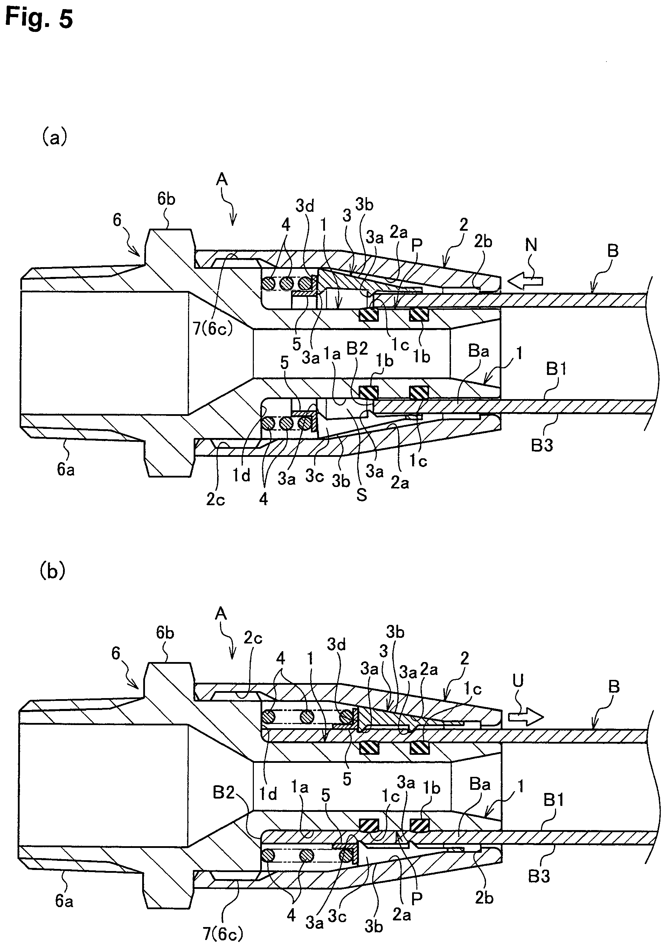

As shown in Figs. 5(a) to 6, Embodiment 2, which is not comprised by the present invention, is different from Embodiment 1 shown in Figs. 1(a) to 4(c) in that an annular recessed ditch 3e is not formed in an outer periphery of a sleeve 3, but the substantially whole outer periphery is inclined linearly, and a sliding surface 3b is integrally formed throughout the substantially whole axial direction of the sleeve 3. However, other structures are similar to Embodiment 1 shown in Figs. 1(a) to 4(c).

In the embodiment shown in Figs. 5(a) to 6, while the substantially whole outer periphery of the sleeve 3, except for a tip end side of a slip-out direction U, is bulgingly formed in an inclined manner, the sliding surface 3b is integrally formed in the substantially whole axial direction of the sleeve 3.

Further, as another embodiment, though it is not shown in the drawings, the whole outer periphery of the sleeve 3 can be bulgingly formed in an inclined manner, so that the sliding surface 3b is integrally formed in the whole axial direction of the sleeve 3.

According to a tube joint A shown in Embodiment 2, in completing connection of a tube body B as shown in Fig. 5(b), an outer periphery provided outside of a radial direction of a projection part 3a (first projection part 3a) plays a role as the sliding surface 3b, and presses a tapered surface 2a of a clamping member 2. Therefore, the projection part 3a (first projection part 3a) can be made cut into an outer surface B3 of the tube body B much stronger than the case shown in Embodiment 1.

Accordingly, there are advantages that the tube body B can be maintained not to slip out for sure only by inserting the tube body B, and that sealability can be improved.

### Embodiment 3

As shown in Figs. 7(a) to 11, Embodiment 3 according to the present invention is different from Embodiment 1 shown in Figs. 1(a) to 4(c) or from Embodiment 2 shown in Figs. 5(a) to 6 in that a tubular joint main body 6 is formed separately from a nipple 1, and that a tube body B is rotatably connected to the joint main body 6 by rotatably mounting the nipple 1 and a clamping member 2 with respect to the joint main body 6. However, other structures are similar to Embodiment 1 shown in Figs. 1(a) to 4(c) or to Embodiment 2 shown in Figs. 5(a) to 6.

To explain in detail, the nipple 1 in which an attaching means 7 of the clamping member 2 is disposed is rotatably mounted with respect to the tubular joint main body 6 formed separately from the nipple 1. As a result, in completing connection of the tube body B, the tube body B is configured to rotatably connect to the joint main body 6 together with the clamping member 2.

In the embodiment shown in Figs. 7(a) to 11, a through-hole 6d is provided to loosely fit the nipple 1 at the center of the joint main body 6. The through-hole 6d penetrates the nipple 1 while being freely fitted into the same. In an outer periphery 1a of the nipple 1 opposed to the through-hole 6d, a latching protrusion 1e and a recessed ditch 1f are formed in each circumferential direction so as to sandwich the through-hole 6d in each axial direction. By removably fitting an annular member 8 into the recessed ditch 1f in the axial direction, and by sandwiching through-hole 6d between the annular member 8 and the latching protrusion 1e, the nipple 1 is rotatably mounted to the joint main body 6. Either in the through-hole 6d of the joint main body 6 or in an opposing surface of the outer periphery 1a of the nipple 1 penetrated by the through-hole 6d, an elastically deformable annular seal member 1g such as an O-ring is mounted. This annular seal member 1g rotatably seals the through-hole 6d and the opposing surface of the outer periphery 1a.

The annular member 8 is formed from an elastically deformable material such as polycarbonate or from other synthetic resins. As the embodiment shown, the annular member 8 is formed in a substantially C-shape and is made to be elastically deformable. Here, a notch 8b continuously adjacent to a central hole 8a is notchedly formed. Then, the annular member 8 is mounted on the recessed ditch 1f of the nipple 1, or mounted on the same after being divided into a plurality of parts so as to pass the central hole 8a.

In the outer periphery of the annular member 8, an external thread 8c is integrally formed as the attaching means 7 of the clamping member 2. The external thread 8c is screwed together with an internal thread 2c. In the outer periphery of the annular member 8 and/or the outer periphery of the clamping member 2, it is preferable to form engaging parts 8d and 2d engaged with a jig or a tool in each circumferential direction, and to screw the above two members by the jig or the tool.

It is preferably that the nipple 1 and the annular member 8, except for the joint main body 6 that requires strength, is formed from a synthetic resin.

Further, as another embodiment, though it is not shown in the drawings, the annular member 8 can be rotatably mounted with respect to the recessed ditch 1f of the nipple 1.

According to such a tube joint A according to Embodiment 3 of the present invention, the tube body B is rotatably connected to the joint main body 6. Therefore, even though the tube body B contorts with respect to the joint main body 6 when connecting the tube body B, the tube body B can rotate in an opposite direction to a contorting direction.

Accordingly, it is possible to resolve the contortion of the tube body B with respect to the joint main body 6.

As a result, there is an advantage that no pressure due to the contortion of the tube body B acts on a connection part of the joint main body 6 and the tube body B, which makes it possible to maintain a connecting state for a prolonged period. At the same time, there is an advantage that fluid smoothly passes through the tube body, which makes it possible to partially prevent the fluid from accumulating.

Further, in cases where the engaging parts 8d and 2d engaged with the jig or the tool in the circumferential direction are formed in the outer periphery of the annular member 8 and/or the outer periphery of the clamping member 2, and where the above two members are screwed together by the jig or the tool, it is difficult for a third party to disassemble the clamping member 2 or to detach the tube body B after connecting the tube body B. Accordingly, it is possible to maintain the connecting state of the tube body B for a prolonged period.

Further, compared to one that integrally forms the joint main body 6 and the nipple 1 by cutting process, in cases where the nipple 1 and the annular member 8, except for the joint main body 6, are formed from the synthetic resin, manufacturing costs can be reduced so that it is advantageous in producing in large quantities.

In embodiments shown in Figs. 7(a) to 11, the nipple 1 includes a rib part 1h near an annular recessed part 1b in the outer periphery 1a. The rib part 1h is provided so as to protrude gradually with respect to an outer peripheral edge 1c1 of an annular seal member 1c.

A plurality of the rib parts 1h is dispersedly and protrusively provided in a circumferential direction along the outer periphery 1a closer to the tip end of the nipple 1 than at least the annular recessed part 1b and the annular seal member 1c. In other words, in the outer periphery 1a of the nipple 1, recessed external surfaces 1a1 are formed between each of the rib parts 1h. Therefore, the outer periphery 1a of the nipple 1 is formed in a protruded and recessed shape in the circumferential direction due to the protruded rib parts 1h and the recessed external surfaces 1a1. Further, the tip end side of the nipple 1 represents a part closer to the upper side (front side) of a tube inserting direction N than the annular recessed part 1b and the annular seal member 1c.

Further, in each rib part 1h, there is a most-protruded part 1h1 disposed closest to the lower side (back side) of the tube inserting direction N. It is preferable to dispose the most-protruded part 1h1 close to the annular seal member 1c as much as possible in an axial direction.

To explain in detail, it is preferable that the rib parts 1h are inclined in the tube inserting direction N to protrude in a radial direction of the nipple 1 with respect to the outer peripheral edge 1c1 of the annular seal member 1c. Further, it is preferable to set a protruded height of the most-protruded part 1h1 slightly lower than the outer peripheral edge 1c1 of the annular seal member 1c which has been compressively deformed by the clamping member 2.

Further, in the outer periphery 1a of the nipple 1, it is preferable to form an annular flat part 1i closer to the base end of the nipple 1 than the annular recessed part 1b and the annular seal member 1c, that is, in the lower side (back side) of the tube inserting direction N. The annular flat part 1i herein has the protruded height lower than that of the most-protruded part 1h1 of the rib parts 1h or than the outer peripheral edge 1c1 of the annular seal member 1c.

As an embodiment of positioning the rib parts 1h, a plurality of (eight) rib parts 1h is disposed closer to the upper side (front side) of the tube inserting direction N than the annular recessed part 1b in the outer periphery 1a of the nipple 1, as shown in Figs. 7(a) to 11. The rib parts 1h herein are disposed in the circumferential direction at a predetermined interval (at an equal interval).

Further, as another embodiment, though it is not shown in the drawings, the number of positions where the rib parts 1h are disposed can be increased or decreased. Alternatively, a positioning interval of the rib parts 1h can be made unequal. Alternatively, instead of the annular flat part 1i, a plurality of the rib parts 1h can be dispersedly disposed in the circumferential direction, closer to the base end of the nipple 1 (lower side of the tube inserting direction N) than the annular recessed part 1b and the annular seal member 1c in the outer periphery 1a of the nipple 1.

According to the tube joint A shown in Figs. 7(a) to 11, by inserting the tube body B along the outer periphery 1a from the tip end side of the nipple 1, the inner surface B1 of the tube body B (connection end Ba) comes into contact with the plurality of rib parts 1h. These contact parts partially and radially expand, and sequentially, approach the outer peripheral edge 1c1 of the annular seal member 1c. Therefore, it is possible that the tip surface B2 of the tube body B which has radially expanded smoothly overcomes the outer peripheral edge 1c1 of the annular seal member 1c without butting against the same.

At the same time, the parts in the inner surface B1 of the tube body B (connection end Ba), that comes into contact with each rib part 1h is pressed comparatively strongly. By contrast, parts in the inner surface B1 of the tube body B, that is opposed to the outer periphery 1a (recessed external surface 1a1) of the nipple 1 except for each rib part 1h is not strongly pressed. Therefore, frictional resistance herein decreases to that extent.

Sequentially, by further inserting the tube body B into the outer periphery 1a of the nipple 1, the inner surface B1 of the tube body B crookedly deforms along the plurality of rib parts 1h and the recessed external surface 1a1 formed between each rib part 1h. Therefore, the tube body B is immovably engaged with the outer periphery 1a of the nipple 1.

In this state, by pushing the inner surface B1 of the tube body B with the clamping member 2 in the radial direction with respect to the outer periphery 1a of the nipple 1, the inner surface B1, the rib parts 1h and the recessed external surface 1a1 of the tube body B engage much stronger. Therefore, the tube body B is unrotatably maintained to the nipple 1.

Accordingly, the tube body B can be inserted smoothly without butting against the annular seal member 1c, and the tube body B can be connected unrotatably with respect to the nipple.

As a result, compared to one in the prior art in which the tube body overcomes protuberant parts (buildup parts) provided to both the front and the rear thereof, and a seal ring provided between the protuberant parts, it is possible to effectively prevent the annular seal member 1c from sticking out the annular recessed part 1b and from turning up. Further, it is possible to remove any cause that leads damages and malfunction of sealability in the annular seal member 1c. At the same time, even when the tube body B contorts with respect to the nipple 1, the tube body B does not slip out. Therefore, it is possible to surely prevent leakage of fluid passing through the tube body B and to improve intensity of the tube body B against slip-out.

Specifically, in the outer periphery 1a of the nipple 1, in a case of forming the annular flat part 1i, that has the protruded height lower than that of the most-protruded part 1h1 of the rib part 1h, closer to the base end of the nipple 1 than annular recessed part 1b, a part in the inner surface B1 of the tube body B, that is opposed to the annular flat part 1i, gets stuck with the annular seal member 1c and the most-protruded part 1h1 of the rib part 1h, and is prevented from slipping out. Such can be achieved even though force is applied to the tube body B in the slip-out direction U, while the tube body is connected to the nipple 1.

Accordingly, the intensity of the tube body B against slip-out can be further improved.

As a result, it is possible to prevent an accident that tube body B comes off or that the fluid leaks, and to maintain the connecting state of the tube body B for sure for a prolonged period.

Further, as shown in Figs. 7(a) to 9, it is preferable that the rib parts 1h include external surfaces 1h2 and edges 1h3. The external surfaces 1h2 are opposed to the inner surface B1 of the tube body B. The edges 1h3 are provided so as to extend in the axial direction of the nipple 1 and to crookedly deform the inner surface B1 of the tube body B when brought into contact with the inner surface B1.

In other words, the rib parts 1h are formed to have a cross section, in the radial direction of the nipple 1, shaped in a substantially rectangular shape including a sector, or in a triangular or polygonal shape by the external surfaces 1h2 and the edges 1h3.

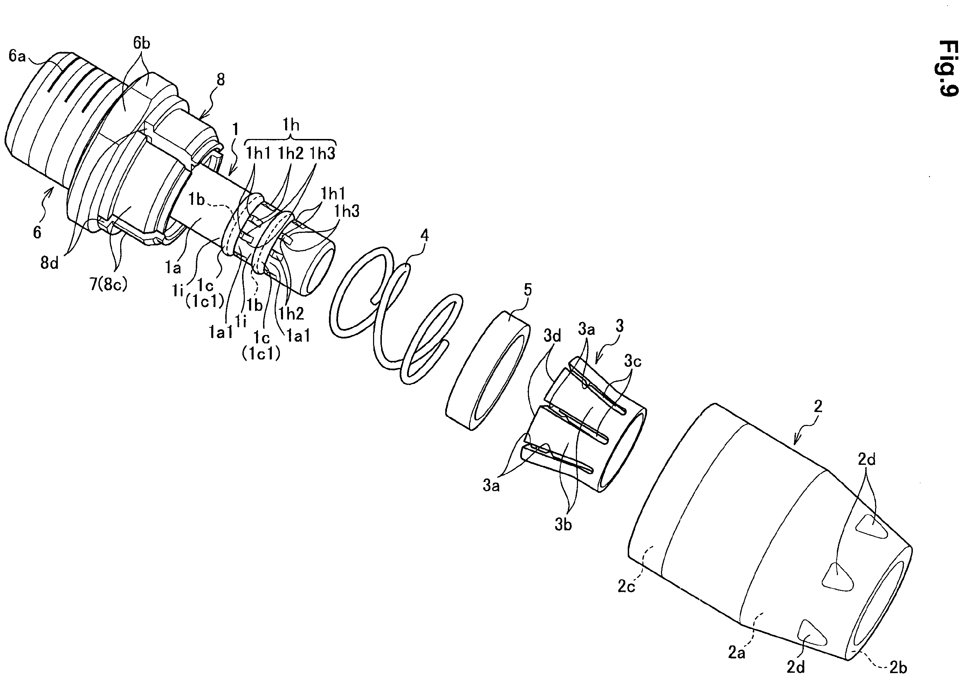

In the embodiment shown in Figs. 7(a) to 9, a planar shape of the rib parts 1h seen from outside the nipple 1 is formed in a belt-like shape having a long axial in the axial direction of the nipple 1 (see Fig. 9). The cross sectional shape of the rib parts 1h along the radial direction of the nipple 1 is formed in a rectangular shape or in a trapezoidal shape (see Figs. 7(a), 7(b)). Further, the external surfaces 1h2 of the rib parts 1h are inclined in a planar manner (see Figs. 7(a), 7(b)).

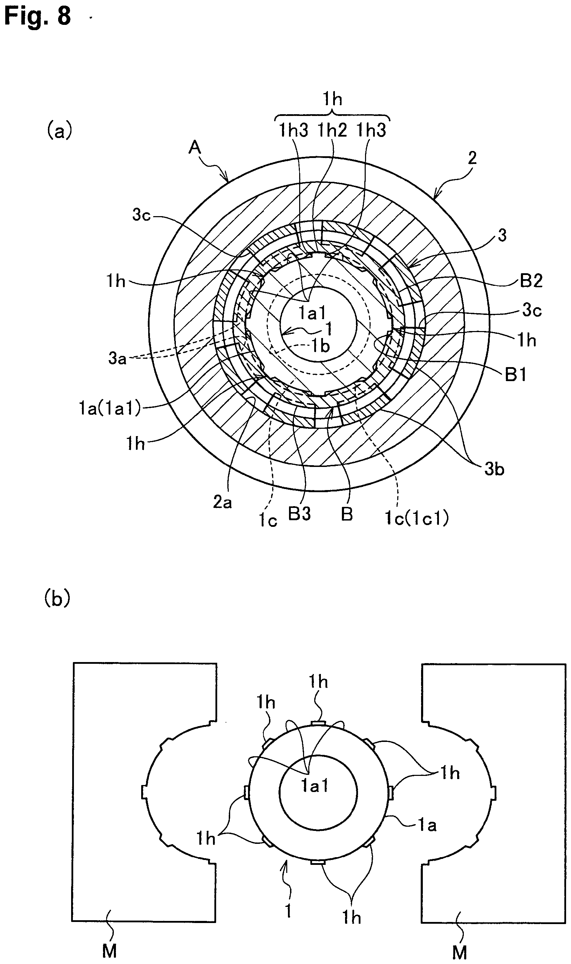

The embodiment shown in Fig. 8(b) shows a case of forming the nipple 1. Here, the nipple 1 and the rib parts 1h are integrally formed from for example, polyacetal or other synthetic resins with a forming die M divided into the right and the left.

Further, as another embodiment, though it is not shown in the drawings, the planar shape or the cross sectional shape of the rib parts 1h can be changed. Further, the external surfaces 1h2 of the rib parts 1h can be curved in an inclined manner.

As mentioned above, in cases where the rib parts 1h include the external surfaces 1h2 opposed to the inner surface B1 of the tube body B, and the edges 1h3 provided so as to extend in the axial direction of the nipple 1 and to crookedly deform the inner surface B1 of the tube body B while brought into contact with the inner surface B1, the edges 1h3 of the rib parts 1h come into contact with the inner surface B1 of the tube body B when inserting the tube body B into the nipple 1. As a result, the inner surface B1 of the tube body B crookedly deforms along each edge 1h3, and the whole tube body B gradually expands. Accordingly, the cross sectional shape of the whole tube body B is formed in a polygonal shape (see Fig. 8(a)).

Accordingly, when the tube body B overcomes the rib parts 1h of the nipple 1, contact resistance between the recessed outer periphery 1a (recessed external surface 1a1) of the nipple 1 disposed between the rib parts 1h and each rib part 1h, and the inner surface B1 of the tube body B becomes smaller than one in which both are brought into contact with each other throughout the whole circumferential direction.

Therefore, there is an advantage that the tube body B can be bulgingly deformed smoothly with comparatively little inserting force.

As a result, even a powerless operator such as a woman or a child can surely carry out connecting operation of the tube body B.

Further, as shown in Fig. 8(a), regarding the cross sectional shape, in the radial direction of the nipple 1, of positions where the rib parts 1h are disposed, suppose a case where the cross sectional shape of four rib parts 1h disposed on a vertical and horizontal line that passes the center of the nipple 1 is shaped in a rectangular shape, while that of the other rib parts 1h disposed between those four rib parts 1h is shaped in a sector shape. There are advantages that the rib parts 1h do not incline in a reverse draft and that the shape can be formed easily when the nipple 1 and the rib parts 1h are integrally formed, for example, from polyacetal or other synthetic resins with the forming die M divided into the right and the left, as shown in Fig. 8(b).

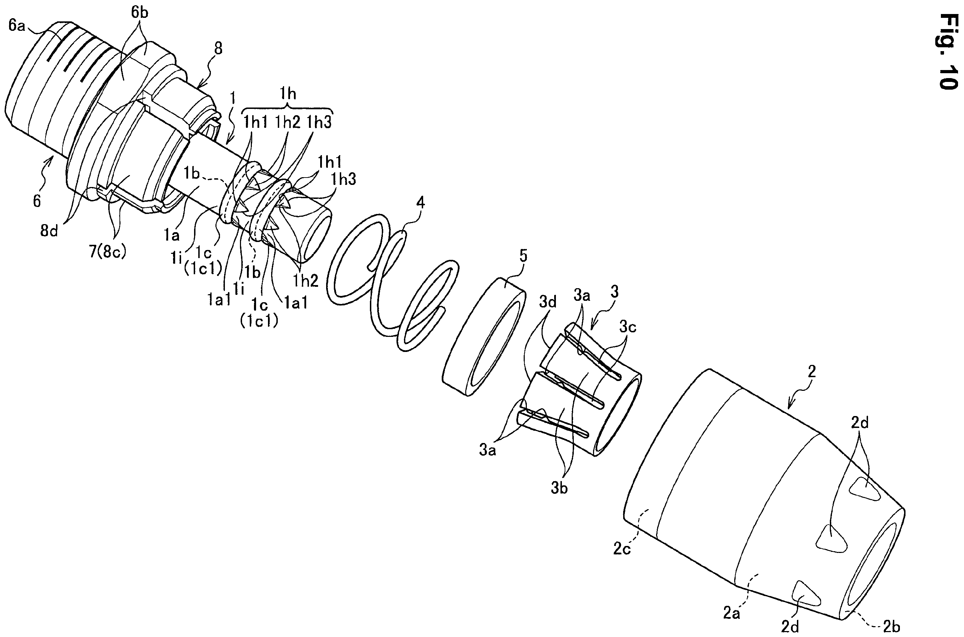

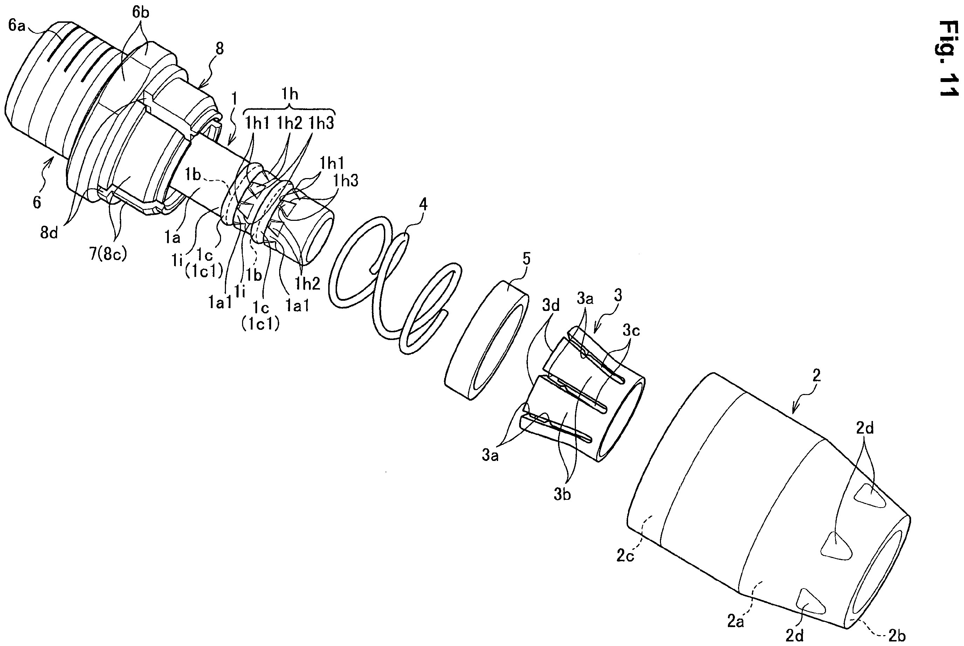

Further, modifications of the shape of the rib parts 1h are shown in Figs. 10 and 11. In the embodiment shown in Fig. 10, regarding a planar shape of rib parts 1h seen from outside a nipple 1, external surfaces 1h2 of the rib parts 1h are formed to become wider with respect to the base end side of the nipple 1.

To explain in detail, the external surfaces 1h2 of the rib parts 1h are formed in a substantially triangular shape. Further, edges 1h3, that is, a pair of the external surfaces 1h2, are formed to become wider in a sectorial shape with respect to the lower side (back side) of the tube inserting direction N.

In the embodiment shown in Fig. 11, external surfaces 1h2 of rib parts 1h are formed to become wider with respect to the tip end side of a nipple 1.

To explain in detail, the external surfaces 1h2 of the rib parts 1h are formed in a substantially triangular shape. Further, edges 1h3, that is, a pair of the external surfaces 1h2, are formed to become wider in a sectorial shape with respect to the upper side (front side) of the tube inserting direction N.

In this manner, in cases where the external surfaces 1h2 of the rib parts 1h are formed so as to become wider with respect to the base end side of the nipple 1, when the tube body B overcomes the rib parts 1h of the nipple 1, the inner surface B1 of the tube body B is made expand along the external surfaces 1h2 and the edges 1h3 of the rib parts 1h.

Accordingly, there is an advantage that the tube body B can be bulgingly deformed smoothly.

As a result, operation of connecting tube body B can be carried out further easier.

In the embodiment shown, two annular recessed parts 1b are formed on the outer periphery 1a of the nipple 1 while the annular seal member 1c is fixed to each annular recessed part. However, the present invention is not restricted thereto. One pair or three or more pairs of the annular recessed parts 1b and the annular seal members 1c can be disposed as well.

Further, as the rib parts 1h, those having a similar diameter in the axial direction (tube inserting direction N) are disposed with respect to the two annular recessed parts 1b. However, the present invention is not restricted thereto. The diameter in the axial direction of the rib parts 1h disposed closest to the tip end of the nipple 1, that is, closest to the upper side (front side) of the tube inserting direction N, may be formed to be longer than the diameter of the other rib parts in the axial direction.

### Embodiment 4

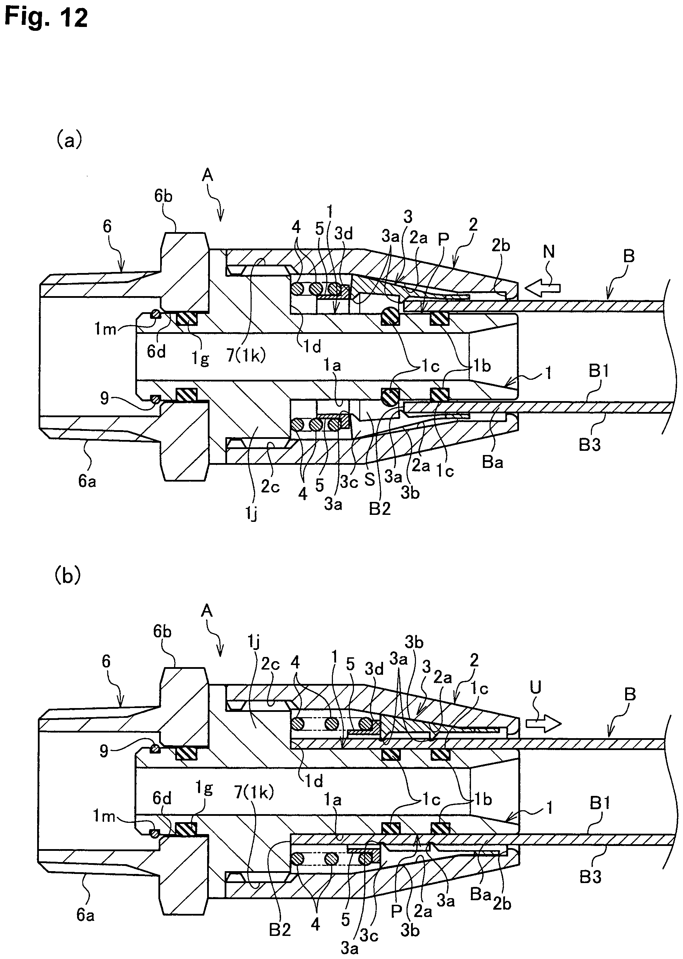

As shown in Figs. 12(a) and 12(b), Embodiment 4, which is not comprised by the present invention, is different from Embodiment 3 shown in Figs. 7(a) and 7(b) in that a retaining member 9 is protrusively provided to an outer periphery 1a of a nipple 1 so as to sandwich a through-hole 6d of a joint main body 6. At the same time, an annular protruded part 1j is integrally formed in a circumferential direction, and an external thread 1k with which an internal thread 2c screws together is integrally formed as an attaching means 7 of a clamping member 2 in an outer periphery of the annular protruded part 1j. However, other structures are similar to Embodiment 3 shown in Figs. 7(a) and 7(b).

In the embodiment shown in Figs. 12(a) and 12(b), a retaining ring including, for embodiment, a C-type ring or an E-type ring is detachably fitted as the retaining member 9 with respect to an annular recessed ditch 1m provided around the outer periphery 1a of the nipple 1. Here, the nipple 1 is rotatably mounted with respect to the joint main body 6 while an outer peripheral edge of the retaining member 9 butts against a hole edge of the through-hole 6d of the joint main body 6.

Further, as another embodiment, though it is not shown in the drawings, a member other than the retaining ring can be used as the retaining member 9 to prevent slip-out.

Further, in the embodiment shown in Figs. 12(a) and 12(b), the nipple 1 does not include a rib part 1h. However, according to the present invention a plurality of rib parts 1h can be protrusively formed on the outer periphery 1a of the nipple 1 as shown in Figs. 7(a) to 11.

According to such tube joint A according to Embodiment 4, function effect similar to Embodiment 3 of the present invention described in Figs. 7(a) and 7(b) can be obtained.

In the embodiment shown, a single layer structural hose is used as the tube body B. Further, it has been described that a laminated hose or a spiral reinforced hose can be used instead. However, the tube body B is not restricted thereto, and a tube may be used instead of a hose.

### EXPLANATION OF LETTERS OR NUMERALS

| | |
|---|---|
| 1 nipple | 1a outer periphery |
| 1b annular recessed part | 1c annular seal member |
| 1c1 outer peripheral edge | 1h rib part |
| 1h1 most-protruded part | 1h2 external surface |
| 1h3 edge | 1i annular flat part |
| 2 clamping member | 2a tapered surface |
| 3 sleeve | 3a projection part |
| 3b sliding surface | 4 elastic member |
| 6 joint main body | B tube body |
| B1 inner surface | B2 tip surface |
| B3 outer surface | N inserting direction (tube inserting direction) of tube body |
| U opposite direction (slip-out direction) to inserting direction of tube body | |

## Claims

1. A tube joint (A) comprising:
a nipple (1) configured to be inserted in a tube body (B) having flexibility, the nipple (1) being provided to be opposed to an inner surface (B1) of the tube body (B);
a clamping member (2) having a tapered surface (2a) provided to be opposed to an outer periphery (1a) of the nipple (1) and provided so that a diameter thereof gradually becomes larger in an inserting direction (N) of the tube body (B);
a sleeve (3) provided to be movable to and fro along the tapered surface (2a) in an inclined direction of the tapered surface (2a), and which elastically and radially expands or contracts in a radial direction; and
an elastic member (4) provided so as to push the sleeve (3) along the tapered surface (2a) in a direction opposite to the inserting direction (N) of the tube body (B),
wherein the sleeve (3) includes:
a projection part (3a) configured to be formed in an inner periphery of the sleeve (3) so as to protrude with respect to the outer periphery (1a) of the nipple (1), and configured to be disposed to butt against a tip surface (B2) of the tube body (B) opposed to the inserting direction (N) of the tube body (B) when inserting the tube body (B), and to be disposed so as to radially contract with respect to an outer surface (B3) of the tube body (B) when moving in the direction opposite to the inserting direction (N) of the tube body (B); and
a sliding surface (3b) configured to be formed on an outer periphery of the sleeve (3) to be opposed to the tapered surface (2a), and to move along the tapered surface (2a) in the inserting direction (N) of the tube body (B) when the projection part (3a) butts against the tip surface (B2) of the tube body (B), and to be disposed so as to move in the direction opposite to the inserting direction (N) of the tube body (B) due to the elastic member (4),
a nd wherein the projection part (3a) radially expands so that the tip surface (B2) of the tube body (B) comes off the projection part (3a) by being moved in the inserting direction (N) of the tube body (B) when butting against the tip surface (B2) of the tube body (B), and the projection part (3a) radially contracts so as to be smaller than an external diameter of the tube body (B) when moving in the direction opposite to the inserting direction (N) of the tube body (B) due to the elastic member (4), wherein the nipple (1) includes an annular seal member (1c) configured to be fixed to an annular recessed part (1b) formed in the outer periphery (1a) of the nipple (1), and to protrude in the radial direction; wherein a rib part (1h) is provided to the outer periphery (1a) of the nipple (1) so as to protrude gradually with respect to the outer peripheral edge (1c1) of the annular seal member (1c), **characterized in that** a plurality of the rib parts (1h) is dispersedly disposed along the outer periphery (1a) in the circumferential direction closer to a tip end of the nipple (1) than at least the annular seal member (1c).

2. The tube joint (A) according to claim 1, **characterized in that** the annular seal member (1c) opposed to the inner surface (B1) of the tube body (B) is protrusively provided within a path in which the sleeve (3) radially expands in the outer periphery (1a) of the nipple (1), the path where the projection part (3a) of the sleeve (3) butts against the tip surface (B2) of the tube body (B).

3. The tube joint (A) according to any one of claims 1 or 2, **characterized in that** the projection part (3a) is disposed at the back side of the annular seal member (1c) in the inserting direction (N) of the tube body (B) in completing connection of the tube body (B).

4. The tube joint (A) according to any one of claims 1 to 3, **characterized in that** a plurality of the projection parts (3a) is disposed in the inner periphery of the sleeve (3) in the inserting direction (N) of the tube body (B).

5. The tube joint (A) according to any one of claims 1 to 4, **characterized in that** a tubular joint main body (6) is formed separately from the nipple (1), and the nipple (1) and the clamping member (2) are rotatably mounted with respect to the joint main body (6) so that the tube body (B) rotatably connects to the joint main body (6).

6. The tube joint (A) according to any one of claims 1 to 5, **characterized in that** an annular flat part (1i) having a protruded height lower than the most-protruded part of the rib part (1h) is formed closer to a base end of the nipple (1) than the annular recessed part (1b) in the outer periphery (1a) of the nipple (1).

7. The tube joint (A) according to any one of claims 1 to 6, **characterized in that** the rib part (1h) includes an external surface (1h2) opposed to the inner surface (B1) of the tube body (B), and an edge (1h3) which is provided so as to extend in an axial direction of the nipple (1) and crookedly deforms the inner surface (B1) of the tube body (B) when coming into contact with the inner surface (B1) of the tube body (B).

8. The tube joint (A) according to claim 7, **characterized in that** the external surface (1h2) of the rib part (1h) is formed so as to widen with respect to the base end side of the nipple (1).

## Patentansprüche

1. Rohrverbindung (A), aufweisend:
ein Anschlussstück (1), das dazu eingerichtet ist, in einen Rohrkörper (B) eingeführt zu werden, der Flexibilität aufweist, wobei das Anschlussstück (1) dafür vorgesehen ist, einer Innenfläche (B1) des Rohrkörpers (B) gegenüberliegend angeordnet zu werden;
ein Klemmelement (2), das eine kegelig zulaufende Fläche (2a) aufweist, die dafür vorgesehen ist, um einem Außenumfang (1a) des Anschlussstücks (1) gegenüberliegend angeordnet zu werden, und dafür ausgelegt ist, dass ein Durchmesser davon in einer Einführrichtung (N) des Rohrkörpers (B) allmählich zunimmt;
eine Hülse (3), die vorgesehen ist, um sich entlang der kegelig zulaufenden Fläche (2a) in einer geneigten Richtung der kegelig zulaufenden Fläche (2a) hin und her bewegen zu lassen, und die sich in einer radialen Richtung elastisch und radial erweitert oder zusammenzieht; und
ein elastisches Element (4), das dafür vorgesehen ist, die Hülse (3) entlang der kegelig zulaufenden Fläche (2a) in eine Richtung zu drücken, die entgegengesetzt zu der Einführrichtung (N) des Rohrkörpers (B) ist, wobei die Hülse (3) aufweist:
einen Vorsprungabschnitt (3a), der dafür ausgelegt ist, in einem Innenumfang der Hülse (3) ausgebildet zu sein, so dass er in Bezug auf den Außenumfang (1a) des Anschlussstücks (1) vorragt, und der dafür ausgelegt ist, angeordnet zu werden, um gegen eine Spitzenfläche (B2) des Rohrkörpers (B) entgegengesetzt zu der Einführrichtung (N) des Rohrkörpers (B) zu stoßen, wenn der Rohrkörper (B) eingeführt wird, und so angeordnet zu sein, dass er sich in Bezug auf eine Außenfläche (B3) des Rohrkörpers (B) radial zusammenzieht, wenn er sich in der Richtung bewegt, die zu der Einführrichtung (N) des Rohrkörpers (B) entgegengesetzt ist; und
eine Gleitfläche (3b), die dazu eingerichtet ist, an einem Außenumfang der Hülse (3) ausgebildet zu sein, um zu der kegelig zulaufenden Fläche (2a) entgegengesetzt angeordnet zu sein, und um sich entlang der kegelig zulaufenden Fläche (2a) in der Einführrichtung (N) des Rohrkörpers (B) zu bewegen, wenn der Vorsprungabschnitt (3a) gegen die Spitzenfläche (B2) des Rohrkörpers (B) stößt, und dafür ausgelegt zu sein, dass sie sich aufgrund des elastischen Elements (4) in der Richtung bewegt, die zu der Einführrichtung (N) des Rohrkörpers (B) entgegengesetzt ist,
und wobei sich der Vorsprungabschnitt (3a), wenn er gegen die Spitzenfläche (B2) des Rohrkörpers (B) stößt, radial erweitert, so dass sich die Spitzenfläche (B2) des Rohrkörpers (B) von dem Vorsprungabschnitt (3a) löst, indem sie in der Einführrichtung (N) des Rohrkörpers (B) bewegt wird, und wobei sich der Vorsprungabschnitt (3a) radial zusammenzieht, um kleiner zu sein als ein Außendurchmesser des Rohrkörpers (B), wenn er sich aufgrund des elastischen Elements (4) in der Richtung bewegt, die zu der Einführrichtung (N) des Rohrkörpers (B) entgegengesetzt ist,
wobei das Anschlussstück (1) ein kreisringförmiges Dichtungselement (1c) enthält, das dafür ausgelegt ist, um an einem kreisringförmigen ausgenommenen Abschnitt (1b) befestigt zu sein, der in dem Außenumfang (1a) des Anschlussstücks (1) ausgebildet ist, und um in der Radialrichtung vorzuragen;
wobei ein Rippenabschnitt (1h) an dem Außenumfang (1a) des Anschlussstücks (1) vorgesehen ist, um in Bezug auf den äußeren peripheren Rand (1c1) des kreisringförmigen Dichtungselements (1c) allmählich hervorzuragen,
**dadurch gekennzeichnet,**
**dass** mehrere der Rippenabschnitte (1h) entlang des Außenumfangs (1a) in der Umfangsrichtung näher an einem Spitzenende des Anschlussstücks (1) als wenigstens das kreisringförmige Dichtungselement (1c) verteilt angeordnet sind.

2. Rohrverbindung (A) nach Anspruch 1, **dadurch gekennzeichnet, dass** das kreisringförmige Dichtungselement (1c), das der Innenfläche (B1) des Rohrkörpers (B) gegenüberliegend angeordnet ist, innerhalb eines Pfades vorragend vorgesehen ist, auf dem sich die Hülse (3) radial in dem Außenumfang (1a) des Anschlussstücks (1) erweitert, der Pfad, auf dem der Vorsprungabschnitt (3a) der Hülse (3) gegen die Spitzenfläche (B2) des Rohrkörpers (B) stößt.

3. Rohrverbindung (A) nach einem beliebigen der Ansprüche 1 oder 2, **dadurch gekennzeichnet, dass** der Vorsprungabschnitt (3a) bei Vollendung der Verbindung des Rohrkörpers (B) an der Rückseite des kreisringförmigen Dichtungselements (1c) in der Einführrichtung (N) des Rohrkörpers (B) angeordnet ist.

4. Rohrverbindung (A) nach einem beliebigen der Ansprüche 1 bis 3, **dadurch gekennzeichnet, dass** mehrere der Vorsprungabschnitte (3a) in dem Innenumfang der Hülse (3) in der Einführrichtung (N) des Rohrkörpers (B) angeordnet sind.

5. Rohrverbindung (A) nach einem beliebigen der Ansprüche 1 bis 4, **dadurch gekennzeichnet, dass** ein rohrförmiger Verbindungsgrundkörper (6) unabhängig von dem Anschlussstück (1) ausgebildet wird, und dass das Anschlussstück (1) und das Klemmelement (2) in Bezug auf den Verbindungsgrundkörper (6) drehbar befestigt sind, so dass sich der Rohrkörper (B) drehbar mit dem Verbindungsgrundkörper (6) verbindet.

6. Rohrverbindung (A) nach einem beliebigen der Ansprüche 1 bis 5, **dadurch gekennzeichnet, dass** ein kreisringförmiger flacher Abschnitt (1i), der eine vorragende Höhe aufweist, die geringer ist als der am meisten vorragende Abschnitt des Rippenabschnitts (1h), näher an einem Basisende des Anschlussstücks (1) ausgebildet ist, als der kreisringförmige ausgenommene Abschnitt (1b) in dem Außenumfang (1a) des Anschlussstücks (1).

7. Rohrverbindung (A) nach einem beliebigen der Ansprüche 1 bis 6, **dadurch gekennzeichnet, dass** der Rippenabschnitt (1h) eine Außenfläche (1h2), die entgegengesetzt zu der Innenfläche (B1) des Rohrkörpers (B) angeordnet ist, und eine Flanke (1h3) aufweist, die vorgesehen ist, um sich in axialer Richtung des Anschlussstücks (1) zu erstrecken, und die Innenfläche (B1) des Rohrkörpers (B) krumm verformt, wenn sie mit der Innenfläche (B1) des Rohrkörpers (B) in Berührung kommt.

8. Rohrverbindung (A) nach Anspruch 7, **dadurch gekennzeichnet, dass** die Außenfläche (1h2) des Rippenabschnitts (1h) so ausgebildet ist, dass sie sich in Bezug auf die Basisstirnseite des Anschlussstücks (1) erweitert.

## Revendications

1. Raccord de tuyau (A) comprenant :
un embout (1) configuré pour être inséré dans un corps de tuyau (B) présentant une flexibilité, l'embout (1) étant pourvu pour être opposé à une surface interne (B1) du corps de tuyau (B) ;
un élément de serrage (2) présentant une surface conique (2a) pourvue pour être opposée à une périphérie externe (1a) de l'embout (1) et pourvue de telle sorte que son diamètre augmente graduellement en direction d'insertion (N) du corps de tuyau (B) ;
un manchon (3) pourvu de manière à pouvoir aller et venir le long de la surface conique (2a) dans une direction inclinée de la surface conique (2a), et qui se dilate ou se contracte élastiquement et radialement en direction radiale ; et
un élément élastique (4) pourvu de manière à pousser le manchon (3) le long de la surface conique (2a) en direction opposée à la direction d'insertion (N) du corps de tuyau (B),
dans lequel le manchon (3) comprend :
une partie de projection (3a) configurée pour être formée dans une périphérie interne du manchon (3) de manière à ressortir par rapport à la périphérie externe (1a) de l'embout (1), et configurée pour être agencée de manière à venir à butée contre une surface de pointe (B2) du corps de tuyau (B) opposée à la direction d'insertion (N) du corps de tuyau (B) lors de l'insertion du corps de tuyau (B), et pour être agencée de manière à se contracter radialement par rapport à une surface externe (B3) du corps de tuyau (B) lors d'un déplacement en direction opposée à la direction d'insertion (N) du corps de tuyau (B) ; et
une surface coulissante (3b) configurée pour être formée sur une périphérie externe du manchon (3) destinée à être opposée à la surface conique (2a) et pour se déplacer le long de la surface conique (2a) en direction d'insertion (N) du corps de tuyau (B) lorsque la partie de projection (3a) vient à butée contre la surface de pointe (B2) du corps de tuyau (B), et pour être agencée de manière à se déplacer en direction opposée à la direction d'insertion (N) du corps de tuyau (B) du fait de l'élément élastique (4), et
dans lequel la partie de projection (3a) se dilate radialement de telle sorte que la surface de pointe (B2) du corps de tuyau (B) se détache de la partie de projection (3a) en étant déplacée en direction d'insertion (N) du corps de tuyau (B) lorsqu'elle vient à butée contre la surface de pointe (B2) du corps de tuyau (B), et la partie de projection (3a) se contracte radialement de manière à présenter un diamètre inférieur à un diamètre externe du corps de tuyau (B) lorsqu'elle se déplace en direction opposée à la direction d'insertion (N) du corps de tuyau (B) du fait de l'élément élastique (4),
dans lequel l'embout (1) comprend un élément d'étanchéité annulaire (1c) configuré pour être fixé à une partie renfoncée annulaire (1b) formée dans la périphérie externe (1a) de l'embout (1), et pour ressortir en direction radiale ;
dans lequel une partie de nervure (1h) est pourvue sur la périphérie externe (1a) de l'embout (1) de manière à ressortir graduellement par rapport au bord périphérique externe (1c1) de l'élément d'étanchéité annulaire (1c),
**caractérisé en ce qu'**une pluralité des parties de nervure (1h) est agencée de manière dispersée le long de la périphérie externe (1a) en direction circonférentielle plus près d'une extrémité de pointe de l'embout (1) qu'au moins l'élément d'étanchéité annulaire (1c).

2. Raccord de tuyau (A) selon la revendication 1, **caractérisé en ce que** l'élément d'étanchéité annulaire (1c) opposé à la surface interne (B1) du corps de tuyau (B) est pourvu de manière à ressortir dans un chemin dans lequel le manchon (3) se dilate radialement dans la périphérie externe (1a) de l'embout (1), la partie de projection (3a) du manchon (3) venant à butée contre la surface de pointe (B2) du corps de tuyau (B) sur le chemin.

3. Raccord de tuyau (A) selon l'une quelconque des revendications 1 et 2, **caractérisé en ce que** la partie de projection (3a) est disposée sur le côté arrière de l'élément d'étanchéité annulaire (1c) en direction d'insertion (N) du corps de tuyau (B) lors de la connexion du corps de tuyau (B).

4. Raccord de tuyau (A) selon l'une quelconque des revendications 1 à 3, **caractérisé en ce qu'**une pluralité de parties de projection (3a) est agencée dans la périphérie interne du manchon (3) en direction d'insertion (N) du corps de tuyau (B).

5. Raccord de tuyau (A) selon l'une quelconque des revendications 1 à 4, **caractérisé en ce qu'**un corps principal de raccord tubulaire (6) est formé séparément de l'embout (1), et l'embout (1) et l'élément de serrage (2) sont montés de façon rotative par rapport au corps principal de raccord (6) de telle sorte que le corps de tuyau (B) se connecte de façon rotative au corps principal de raccord (6).

6. Raccord de tuyau (A) selon l'une quelconque des revendications 1 à 5, **caractérisé en ce qu'**une partie plane annulaire (1i) présentant une hauteur saillante inférieure à celle de la partie la plus saillante de la partie de nervure (1h) est formée plus près d'une extrémité de base de l'embout (1) que la partie renfoncée annulaire (1b) dans la périphérie externe (1a) de l'embout (1).

7. Raccord de tuyau (A) selon l'une quelconque des revendications 1 à 6, **caractérisé en ce que** la partie de nervure (1h) comprend une surface externe (1h2) opposée à la surface interne (B1) du corps de tuyau (B) et un bord (1h3) pourvu de manière à s'étendre en direction axiale de l'embout (1), et déforme la surface interne (B1) du corps de tuyau (B) en la recourbant lorsqu'elle vient en contact avec la surface interne (B1) du corps de tuyau (B).

8. Raccord de tuyau (A) selon la revendication 7, **caractérisé en ce que** la surface externe (1h2) de 1a partie de nervure (1h) est formée de manière à s'élargir par rapport au côté d'extrémité de base de l'embout (1).
